# EUROPEAN PATENT SPECIFICATION

(11) **EP 4 217 276 B1**
(45) Date of publication and mention of the grant of the patent: **30.10.2024**
(21) Application number: 21787502.0
(22) Date of filing: 23.09.2021
(51) Int. Cl.: B26D 11/00, B65B 25/06, B65B 1/24, B26D 1/08, B26D 7/06, A22C 25/18, A23L 17/00, B65B 63/02, B65B 43/50, B65B 35/26, B65B 35/24, B65B 5/10, B65B 55/22

(54) **AUTOMATIC CANNING SYSTEM FOR A FOOD PRODUCT**
AUTOMATISCHES KONSERVIERUNGSSYSTEM FÜR EIN LEBENSMITTELPRODUKT
SYSTÈME AUTOMATIQUE DE MISE EN CONSERVE D'UN PRODUIT ALIMENTAIRE

(30) Priority: 24.09.2020 IT 202000022498
(43) Date of publication of application: 02.08.2023
(73) Proprietor: S.T.G.M. Società Trasformazione Gomma Metalli S.r.l, 88044 Marcellinara (CZ) (IT)
(72) Inventor: SCERBO, Saverio, 88044 Marcellinara (CZ) (IT)
(74) Representative: Giuliano, Natalia
(86) International application number: PCT/IB2021/058673
(87) International publication number: WO 2022/064407

(56) References cited:
- FR-A- 1 517 175
- FR-A1- 3 032 690
- US-A- 2 092 786
- US-A- 3 012 595
- US-A- 5 887 414

## Description

The present invention relates to an automatic canning system for a food product.

Furthermore, the present invention relates to an automatic canning method for a food product.

In particular, the present invention relates to an automatic canning system and method for a food product in glass jars for their preservation, in particular of tuna fillets, capable of automating the cutting phase of the food product and the packaging phase of the same in at least one glass jar.

As is known, in companies producing packaged foods preserved in glass jars and in particular tuna fillets, even if they are equipped with automated systems, the stages of the process concerning cutting the tuna into fillets and packaging in jars are carried out manually by operators assigned to these tasks. In fact, the tuna steaks are first cooked according to the initial dimensions with which they are delivered by the suppliers, and then they are manually cleaned and prepared for the cutting phase into fillets suitable to be packaged in containers, typically in glass jars.

The subsequent phase of cutting the tuna steaks into fillets is currently carried out manually by operators specifically assigned to this task, since cooked tuna has such characteristics as to make it very delicate and easily flaky. For the same reason, also the subsequent phase of placing the tuna fillets in the appropriate jars, is carried out manually by operators assigned to this task, so as to maintain the integrity of the fillets and not compromise the quality and aesthetics of the jars.

Document FR 3 032 690 A1 discloses a system according the preamble of claim 1.

The purpose of the present invention is to provide an automatic canning system for a food product, and in particular for tuna steaks, which allows to carry out the step of cutting the tuna steaks into fillets and the step of packaging the tuna fillets in jars in an automated way, guaranteeing the integrity of the food product and, therefore, the quality and aesthetics of the finished product, overcoming the limits of the known art.

The object of the present invention is therefore to provide an automatic canning system for a food product having characteristics such as to overcome the limits that still affect the solutions previously described with reference to the known art.

According to the present invention, an automatic canning system for a food product is provided, as defined in claim 1.

According to the present invention, an automatic canning method for a food product is also implemented, as defined in claim 7.

For a better understanding of the present invention, a preferred embodiment is now described, purely by way of nonlimiting example, with reference to the attached drawings, in which:
- Figure 1 shows a schematic top view of a first embodiment of an automatic canning system for a food product, according to the invention;
- Figure 2 shows a perspective view of a rotor of the automatic canning system for a food product, according to the invention;
- Figure 3 shows a top view of the automatic canning system for a food product, according to the invention;
- Figure 4 shows a top view of the automatic canning system for a food product, together with a detail view of a radial thrust system, according to the invention;

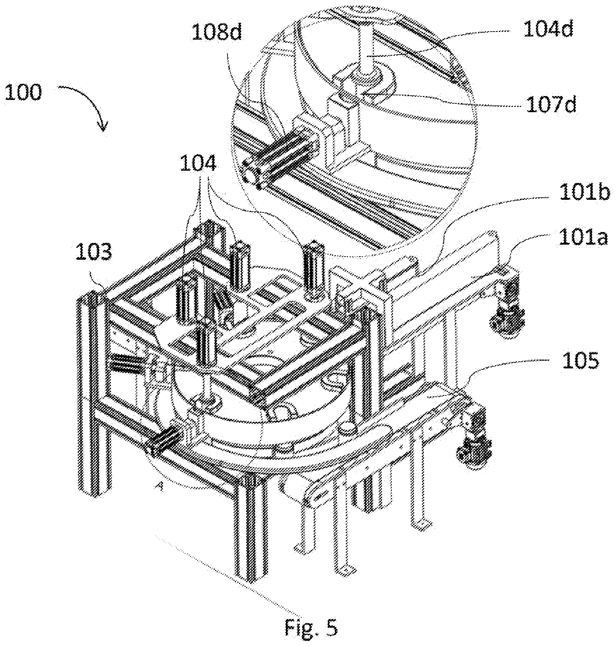

- Figure 5 shows a three-dimensional perspective view of the automatic canning system for a food product and a detail view of a rotor station, according to the invention;

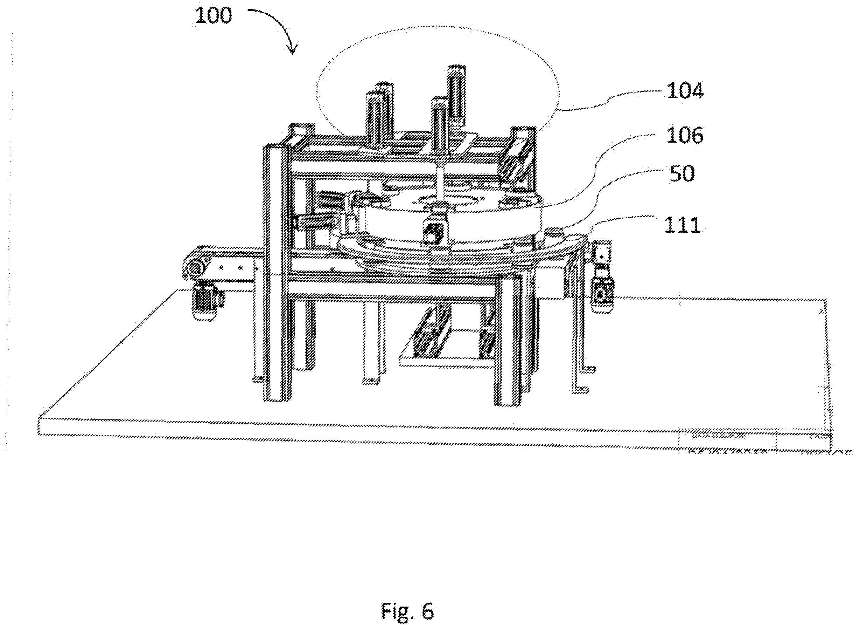

- Figure 6 shows a second three-dimensional view of the automatic canning system for a food product, according to the invention;
- Figure 7 shows a detailed three-dimensional view of a cutting system of the automatic canning system for a food product, according to the invention.

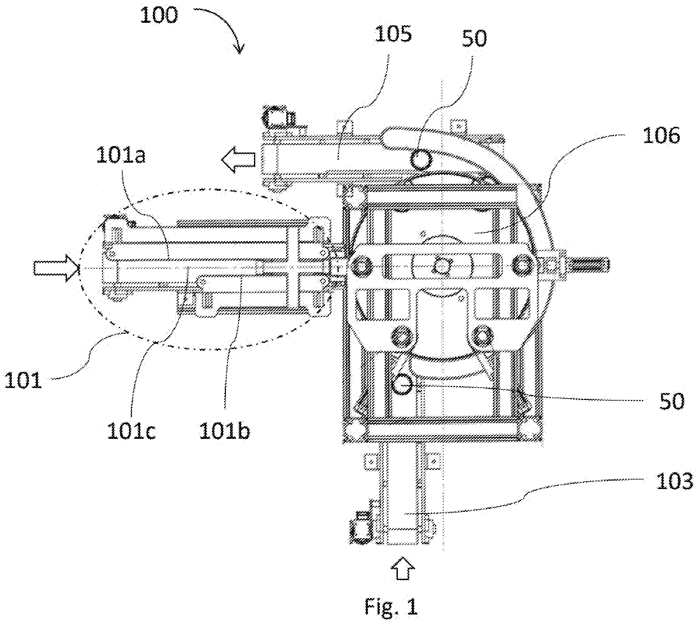

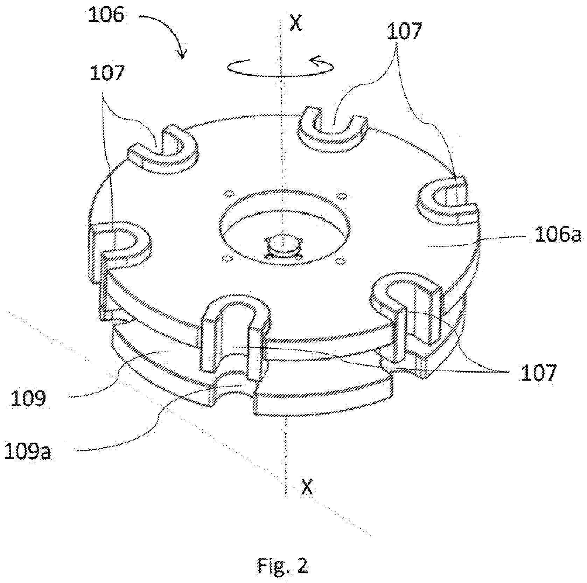

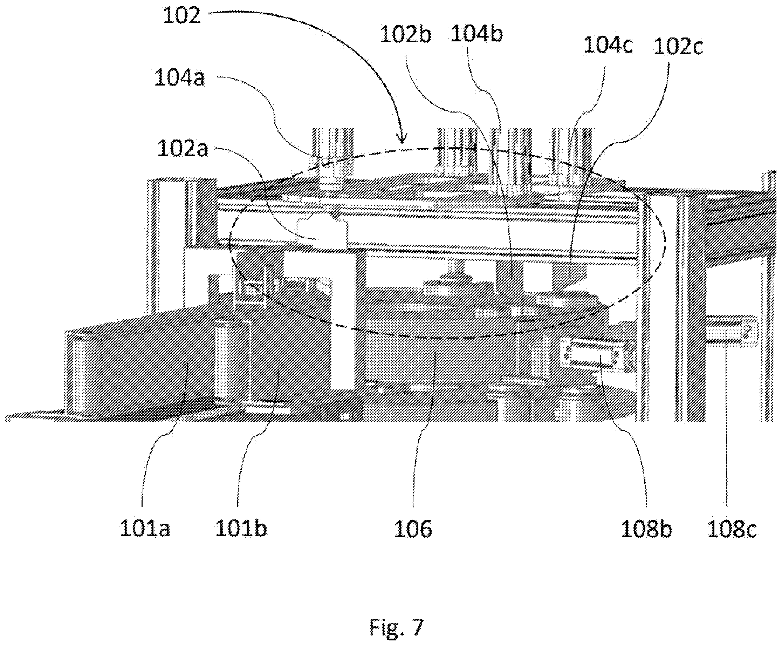

More in detail, with particular reference to Figures 1 and 2, the automatic canning system 100 for a food product comprises:
- a first handling system for moving a food product to be canned, preferably a tuna steak, suitable for conveying the food product to a vertical axis rotor 106 and to a cutting system 102;
- a vertical axis rotor 106 comprising a first circular plate 106a rotating around a central axis X-X having on its perimeter a plurality of housings 107 equidistant from each other and with a 'U' semi-cylindrical section, shown in figure 2;
- a cutting system 102 for the food product comprising: a first cutting element 102a positioned at one end of the first handling system 101 and synchronized thereto; a second cutting element 102b and a third cutting element 102c adapted to cut the food product to be canned into gradually smaller portions and synchronized with the vertical axis rotor 106, shown in figure 7;
- a second handling system 103 able to move empty jars 50 in which the food product is canned following cutting by means of the cutting system 102, suitable for conveying the empty jars 50 to the vertical axis rotor 106;
- a third handling system 105 for moving the jars 50 filled with the food product cut by means of the cutting system 102, or filled after processing, suitable for moving the full jars, from the vertical axis rotor 106 to subsequent processing.

According to the invention, the vertical axis rotor 106 rotates in a synchronized manner with the cutting system 102 and such that each housing of the plurality of housings 107 is located sequentially:
- in a first cutting station 107a for cutting a steak in correspondence with the first handling system 101 and the first cutting element 102a;
- in a second cutting station 107b in correspondence with the second cutting element 102b;
- in a third cutting station 107c in correspondence with the third cutting element 102c;
- in a fourth station 107d in which the cutted food product is pushed vertically into a jar 50;
- in a fifth station 107e and outlet of the jar 50 by means of the third handling system 105.

According to an aspect of the invention, the first handling system 101 and the second handling system 103 converge on the vertical axis rotor 106 and is moved synchronously with the first handling system 101 and the cutting system 102.

According to an aspect of the invention, the vertical axis rotor 106, the first handling system 101, the second handling system 103, and the cutting system 102 are moved by at least one motor.

According to an aspect of the invention, the vertical axis rotor 106, the first handling system 101, the second handling system 103, and the cutting system 102 are each moved by an independent motor.

According to an aspect of the invention, the automatic canning system 100 comprises a plurality of pushing pistons 104 connected to the cutting system 102 and movable in a vertical direction parallel to the axis of rotation of the vertical axis rotor 106 and synchronized to it.

According to an aspect of the invention, the second handling system 103 is preferably placed orthogonally to the first handling system 101.

According to the invention, the first circular plate 106a of the vertical axis rotor 106 has on its perimeter a plurality of housings 107, preferably six housings 107, equidistant from each other, having a semi-cylindrical 'U' section, configured to house slices of food product, preferably tuna steaks, to be packaged in jars 50 and transported towards the vertical axis rotor 106 by the first handling system 101.

According to an aspect of the invention, the automatic canning system 100 comprises a second circular plate 109, which rotates integrally and coaxially with the vertical axis rotor 106 and is located below the first circular plate 106a of the vertical axis rotor 106. The second circular plate 109 comprises, on its surface perimeter, a plurality of semi-cylindrical recesses 109a for housing the jars 50, in the form of semi-cylindrical recesses, each positioned under each housing of the plurality of housings 107. The second circular plate 109 rotates synchronously with the first circular plate 106a and, therefore, the jars 50 are first positioned in the plurality of semi-cylindrical recesses 109a of the second circular plate 109 and, subsequently, dragged and positioned at the housings 107.

According to an aspect of the invention, the first handling system 101 of the food product to be packaged is composed of a first side conveyor belt 101a, a second side conveyor belt 101b, of shorter length than the first side conveyor belt 101a, a horizontal conveyor belt 101c, interposed between the first side conveyor belt 101a and the second side conveyor belt 101b. According to the invention, the first side conveyor belt 101a, the second side conveyor belt 101b and the horizontal conveyor belt 101c are moved at the same speed. Advantageously, the relative arrangement of the conveyor belts and the speeds are therefore such as not to create shear stresses on the surfaces of the handled product.

The first handling system 101 is configured to transport the product to be packaged placed on a portion thereof, towards the vertical axis rotor 106. The first side conveyor belt 101a and second side conveyor belt 101b have different lengths so as to advantageously facilitate the access of the product, preferably tuna in slices, to be packaged and transported without being damaged.

According to an aspect of the invention, the first handling system 101 moves the food to be packaged, and in particular the tuna steak, previously treated and prepared for this processing phase, until it reaches the correct position with respect to the cutting system 102, in particular the steak cutting station, or first cutting station 107a, in correspondence with the vertical axis rotor 106.

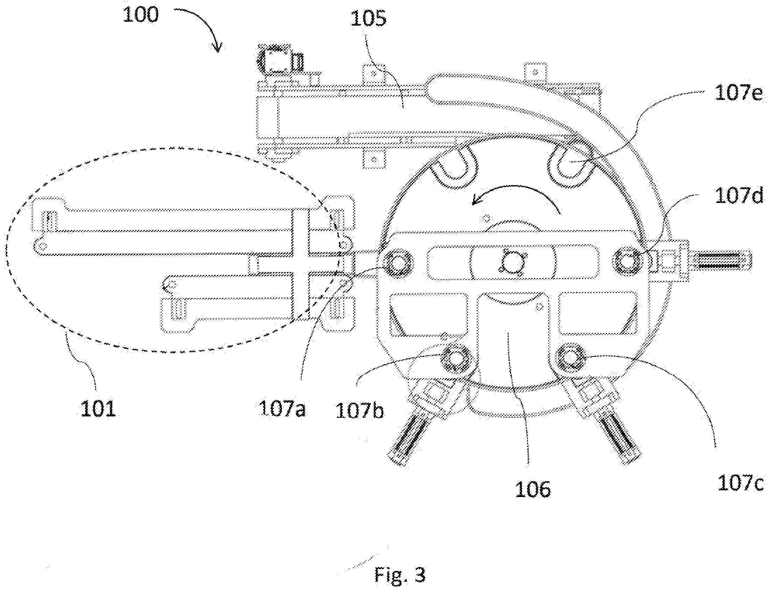

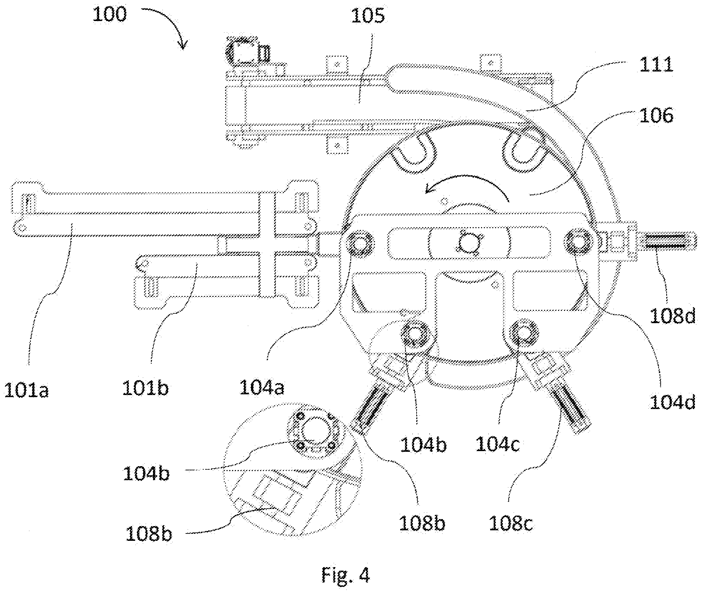

As best shown in FIGS. 3 and 4, the plurality of pushing pistons 104 comprises:
- a first vertical piston 104a equipped with a first cutting element 102a and positioned in correspondence with an housing of the rotor 106 which, during rotation, is located in correspondence with the first handling system 101, said first cutting station 107a;
- a second vertical piston 104b equipped with a second cutting element 102b and placed in correspondence with a second housing of the rotor 106 in correspondence with the second cutting station 107b;
- a third vertical piston 104c equipped with a third cutting element 102c placed in correspondence with a third seat of the rotor 106 in correspondence with the third cutting station 107c.

According to an aspect of the invention, the cutting system 102 is configured to perform, in the first cutting station 107a, a vertical cut such as to form a slice in parallelepiped shape of suitable dimensions for the jar 50 in which it will be packaged. Furthermore, the cutting system 102 is configured to divide the tuna steak into fillets suitable for packaging when it is in the second cutting station 107b and in the third cutting station 107c.

Advantageously according to the invention, the cutting system 102 carries out the processing in such a way as to ensure the integrity of the tuna fillets, and therefore the aesthetics of the finished product.

According to one aspect of the invention, the cutting system 102 is selected from the group consisting of:
- Water cutting system;
- Ultrasonic cutting system;
- Blade cutting system.

According to an aspect of the invention, the first handling system 101 has such a conformation as to progressively narrow until it reaches the minimum width in proximity to a first cutting station 107a of the vertical axis rotor 106. In other words, the first side conveyor belt 101a and the second belt side conveyor 101b have a reciprocal distance which decreases as they approach the rotor 106.

Advantageously, this conformation guarantees the correct channeling of the tuna fillets according to characteristics suitable for optimal packaging.

According to an aspect of the invention, as shown in Figure 1, the second handling system 103 of the empty jars 50 is placed orthogonally to the first handling system 101, adapted to transport the jars 50 to be filled with the food product towards the rotor 106.

In use, the second handling system 103 has a movement synchronized with the first handling system 101, so as to allow the progressive positioning of the empty jars 50 in the first housing 107a and to allow them to be filled with the tuna fillets transported up to the first cutting station 107a from the first handling system 101.

According to an aspect of the invention, each vertical pushing piston 104a, 104b, 104c can be moved alternately from top to bottom and is synchronized with the rotor 106.

Advantageously, each pushing piston 104a, 104b, 104c facilitates and ensures, without compromising the integrity of the food product, preferably tuna fillets, and the correct transfer of the tuna fillets themselves from the position of the first cutting station 107a of the first handling system 101 to jar 50, moved with the second handling system 103.

Furthermore, according to an aspect of the invention, the automatic canning system 100 comprises a plurality of pliers 108b, 108c, 108d which can be moved in a radial direction towards the axis of rotation of the rotor 106 and at the second, third and fourth cutting stations 107b, 107c, 107d. Each plier 108b, 108c, 108d comprises at one end of it a semi-cylindrical shape profile, having a diameter substantially corresponding to the diameter of the jar 50 to be filled.

Advantageously, the plurality of pliers 108a, 108b, 108c is suitable for radial compaction of the tuna steak in the housing 107.

According to an aspect of the invention, the second handling system 103 progressively transports the jars 50, ready and containing tuna fillets, to the subsequent workstations used for subsequent processing.

In use, a food product, preferably a tuna steak, is moved by the conveyor belt of the first handling system 101 to the first cutting station 107a. Subsequently, on the product, or tuna steak, a first cut is made, in the vertical direction, by means of a first cutting element 102a, and a further cut into fillets of equal and predetermined size in the positions of the second and third cutting station 107b and 107c. Afterwards the tuna fillets obtained from the previous cutting phases are conveyed to an outlet. The empty jars 50 are moved on a movement system synchronized with the first conveyor belt to a position corresponding to the outlet seat and lower thereto. A pushing piston is then activated for the vertical movement of the fillets from the outlet seat inside the jar which is then moved, full of tuna fillets, towards an oil injection station. Finally, it is closed. More specifically, the tuna steak to be packaged is fed onto the first handling system 101 until it is transported horizontally towards the first cutting station at the first cutting station 107a. The rotor 106 rotates by dragging the tuna slice from the first cutting station 107a to the second cutting station 107b in which the radially movable plier 108b keeps the slice compact and the second vertical piston 104b performs the second cut by means of the second cutting element 102b.

Further rotation of the rotor 106 drags the slice into a third cutting station 107c in correspondence with which the radial plier 108c keeps the slice compact against the seat 107c of the vertical axis rotor 106, and a third vertical piston 104c, comprising a third cutting element 102c, preferably a blade, makes a third cut, orthogonal to the second cut.

An empty jar 50 arrives at the second cutting station 107b by means of the second movement system 103 and is dragged synchronously to the tuna steak.

In correspondence with the fourth station 107d a fourth vertical piston 104d is able to push the slices, already suitably cut, into the jar 50 below.

The rotor 106 at this point rotates again, transporting the full jar 50 to a fifth station 107e in which the jar 50 is diverted by means of a guide 111 and led by the third handling system 105 to the subsequent processing steps, that is typically to filling with oil and when the finished jar is closed.

The present invention also relates to an automatic canning method for a food product, preferably of tuna in slices, in at least one jar 50 by means of the automatic canning system 100, comprising the steps of:
- moving a food product by means of the conveyor belt of the first handling system 101 up to the first cutting station 107a;
- making, along the vertical direction, a first cut using the first cutting element 102a;
- making an additional cut of the food product by means of a second cutting element 102b and a third cutting element 102c, in fillets of equal and predetermined size respectively at the second cutting station 107b and at the third cutting station 107c;
- conveying the food product cut in the previous steps to an outlet;
- moving at least one jar 50 empty over a handling system synchronized with the first conveyor belt to a position corresponding to the outlet of the cut food product and placed below said outlet;
- activating a pushing piston to move vertically the fillets from the outlet into the jar 50;
- moving the jar 50 filled with fillets of food product towards an oil injection station;
- closing the jar 50 by means of a cap.

Advantageously according to the invention, the automatic canning system and method for a food product allow to carry out in an automated way a procedure currently carried out manually and therefore expensive and with a long time, without damaging the food product.

Furthermore, advantageously according to the invention, the automatic canning system for a food product is compact.

Finally, advantageously, the automatic canning system for a food product according to the invention is versatile, as it can be applied to tuna steaks as well as to other food products intended for packaging.

It is clear that modifications and variations can be made to the automatic canning system and method for a food product described and illustrated herein without departing from the protective scope of the present invention, as defined in the attached claims.

## Claims

1. Automatic canning system (100) for a food product, said food product preferably consisting of tuna steaks, comprising:
- a vertical axis rotor (106) comprising a first circular plate (106a) spinning around a central axis X-X having over its perimeter a plurality of housings (107) equally spaced from each other and having a U-shaped semi-cylindrical section;
- a first handling system (101) able to move a food product to be canned to one of the housings of the vertical axis rotor (106);
- a cutting system (102) for a food product, comprising: a first cutting element (102a) placed at one end of the first handling system (101) and synchronized with it;
- a second handling system (103) able to move jars (50) empty into which the food product is canned following the cut by means of the cutting system (102);
- a third handling system (105) able to move the jars (50) filled with the food product cut through the cutting system (102), said third handling system (105) being able to move the jars (50) filled with the food product from the vertical axis rotor (106) towards subsequent processing steps;
**characterized in that**:
- said cutting system (102) also comprises a second cutting element (102b) and a third cutting element (102c) synchronized with the vertical axis rotor (106) and able to cut the food product to be canned in fillets of equal and predetermined size respectively at a second cutting station (107b) and at a third cutting station (107c);
- and **in that** said automatic canning system (100) comprises a plurality of pushing pistons (104) comprising:
- a first vertical piston (104a) connected to the first cutting element (102a) and placed at a first cutting station (107a); - a second vertical piston (104b) connected to the second cutting element (102b), and placed at the second cutting station (107b); - a third vertical piston (104c) connected to the third cutting element (102c) and placed at the third cutting station (107c), the plurality of pushing pistons (104) being connected to the cutting system (102) and able to be moved along the vertical direction alongside the rotational axis of the vertical axis rotor (106) and synchronized to said vertical axis rotor (106), said vertical axis rotor being configured to rotate synchronously with the cutting system (102) so that each housing comprised in the plurality of housings (107) is, sequentially: - in a first cutting station (107a) near the first handling system (101) and the first cutting element (102a); - in a second cutting station (107b) near the second cutting element (102b); - in a third cutting station (107c) near the third cutting element (102c); - in a fourth station (107d) where the cut food product is vertically pushed into a jar (50); and - in a fifth station (107e) where the jar (50) exits by means of the third handling system (105).

2. Automatic canning system (100) for a food product according to claim 1, **characterized in** comprising a second circular plate (109), placed inferiorly with respect to the first circular plate (106a) of the vertical axis rotor (106) and coaxial to said vertical axis rotor (106) comprising, over its outer surface, a plurality of semi-cylindrical recesses (109a) able to move the jars (50), each of said semi-cylindrical recesses (109a) being placed below each housing comprised in the plurality of housings (107) and spinning synchronously with the first circular plate (106a).

3. Automatic canning system (100) according to claim 1, **characterized in that** the first handling system (101) able to move a food product to be canned comprises:
- a first side conveyor belt (101a);
- a second side conveyor belt (101b), shorter than the first side conveyor belt (101a);
- a horizontal conveyor belt (101c) interposed between the first side conveyor belt (101a) and the second side conveyor belt (101b);
the first side conveyor belt (101a), the second side conveyor belt (101b) and the horizontal conveyor belt (101c) being able to be moved at the same speed.

4. Automatic canning system (100) according to claim 1, **characterized in that** said plurality of pushing pistons (104) comprises a fourth vertical piston (104d) placed near the fourth station (107d).

5. Automatic canning system (100) according to claim 1, **characterized in that** the cutting system (102) is chosen from the group consisting of:
- water cutting system;
- ultrasonic cutting system;
- blade cutting system.

6. Automatic canning system (100) according to claim 1, **characterized in** comprising a plurality of pliers (108b, 108c, 108d) able to be moved along a radial direction towards the rotational axis of the vertical axis rotor (106) and respectively near to the second and third cutting stations (107b, 107c) and to the fourth station (107d), each plier (108b, 108c, 108d) having at one of its ends a semi-cylindrical-shaped profile.

7. Automatic canning method for a food product into at least a jar (50) by means of the automatic canning system (100) according to one of the previous claims, comprising the following steps:
- moving a food product by means of a first handling system (101) up to a first cutting station (107a);
- making, along the vertical direction, a first cut by means of the first cutting element (102a);
- making an additional cut of the food product by means of a second cutting element (102b) and a third cutting element (102c), in fillets of equal and predetermined size respectively at a second cutting station (107b) and at a third cutting station (107c);
- conveying the food product cut in the previous steps to an outlet;
- moving at least one jar (50) empty over a handling system synchronized with the first conveyor belt to a position corresponding to the outlet of the cut food product and placed below said outlet;
- activating a pushing piston to move vertically the fillets from the outlet into the jar (50);
- moving the jar (50) filled with fillets of food product towards an oil injection station;
- closing the jar (50) by means of a cap.

## Patentansprüche

1. Automatisches Konservierungssystem (100) für ein Lebensmittelprodukt, wobei das Lebensmittelprodukt vorzugsweise aus Thunfischsteaks besteht, das Folgendes umfasst:
- einen Vertikalachsenrotor (106), der eine erste kreisförmige Platte (106a) umfasst, die sich um eine zentrale Achse X-X dreht und über ihren Umfang mehrere Gehäuse (107) aufweist, die gleichmäßig voneinander beabstandet sind und über einen U-förmigen halbzylindrischen Querschnitt verfügen;
- ein erstes Handhabungssystem (101), mit dem ein zu konservierendes Lebensmittelprodukt zu einem der Gehäuse des Vertikalachsenrotors (106) bewegt werden kann;
- ein Schneidesystem (102) für ein Lebensmittelprodukt, das Folgendes umfasst: ein erstes Schneidelement (102a), das an einem Ende des ersten Handhabungssystems (101) angeordnet und mit diesem synchronisiert ist;
- ein zweites Handhabungssystem (103), mit dem leere Gefäße (50) bewegt werden können, in die das Lebensmittelprodukt nach dem Schneiden durch das Schneidesystem (102) eingeführt wird;
- ein drittes Handhabungssystem (105), mit dem die mit dem vom Schneidesystem (102) geschnittenen Lebensmittelprodukt gefüllten Gefäße (50) bewegt werden können, wobei das dritte Handhabungssystem (105) die mit dem Lebensmittelprodukt gefüllten Gläser (50) vom Vertikalachsenrotor (106) zu den nachfolgenden Verarbeitungsschritten bewegen kann;
**dadurch gekennzeichnet, dass**
- das Schneidesystem (102) zudem ein zweites Schneideelement (102b) und ein drittes Schneideelement (102c) umfasst, die mit dem Vertikalachsenrotor (106) synchronisiert sind und das zu konservierende Lebensmittelprodukt an einer zweiten Schneidestation (107b) bzw. an einer dritten Schneidestation (107c) in Filets von identischer und vorab festgelegter Größe zu schneiden;
- und dass das automatische Konservierungssystem (100) mehrere Schubkolben (104) umfasst, die Folgendes umfassen: - einen ersten vertikalen Kolben (104a), der mit dem ersten Schneidelement (102a) verbunden und an einer ersten Schneidestation (107a) angeordnet ist;
- einen zweiten vertikalen Kolben (104b), der mit dem zweiten Schneidelement (102b) verbunden und an der zweiten Schneidestation (107b) angeordnet ist; - einen dritten vertikalen Kolben (104c), der mit dem dritten Schneidelement (102c) verbunden und an der dritten Schneidestation (107c) angeordnet ist, wobei die mehreren Schubkolben (104) mit dem Schneidesystem (102) verbunden sind und entlang der vertikalen Richtung entlang der Rotationsachse des Vertikalachsenrotors (106) bewegt und mit dem Vertikalachsenrotor (106) synchronisiert werden können, wobei der Vertikalachsenrotor so konfiguriert ist, dass er sich synchron mit dem Schneidesystem (102) dreht, sodass sich jedes der in den mehreren Gehäusen (107) vorhandenen Gehäuse nacheinander: - in einer ersten Schneidestation (107a) in der Nähe des ersten Handhabungssystems (101) und des ersten Schneidelements (102a) befindet; - in einer zweiten Schneidestation (107b) in der Nähe des zweiten Schneidelements (102b) befindet; - in einer dritten Schneidestation (107c) in der Nähe des dritten Schneidelements (102c) befindet; - in einer vierten Station (107d) befindet, in der das geschnittene Lebensmittelprodukt vertikal in ein Gefäß (50) gedrückt wird; und - in einer fünften Station (107e) befindet, in der das Gefäß (50) mithilfe des dritten Handhabungssystems (105) ausgeführt wird.

2. Automatisches Konservierungssystem (100) für ein Lebensmittelprodukt gemäß Anspruch 1, das sich dadurch auszeichnet, dass es eine zweite kreisförmige Platte (109) umfasst, die in Bezug auf die erste kreisförmige Platte (106a) des Vertikalachsenrotors (106) tiefer und koaxial zum Vertikalachsenrotor (106) angeordnet ist, und das an der Außenfläche mehrere halbzylindrische Aussparungen (109a) aufweist, mit denen die Gefäße (50) bewegt werden können, wobei die einzelnen halbzylindrischen Aussparungen (109a) jeweils unter einem der mehreren Gehäuse (107) angeordnet sind und sich synchron mit der ersten kreisförmigen Platte (106a) drehen.

3. Automatisches Konservierungssystem (100) gemäß Anspruch 1, das sich dadurch auszeichnet, dass das erste Handhabungssystem (101), mit dem ein zu konservierendes Lebensmittelprodukt bewegt werden kann, Folgendes umfasst:
- ein erstes seitliches Förderband (101a);
- ein zweites seitliches Förderband (101b), das kürzer als das erste seitliche Förderband (101a) ist;
- ein horizontales Förderband (101c), das zwischen dem ersten seitlichen Förderband (101a) und dem zweiten seitlichen Förderband (101b) angeordnet ist;
wobei das erste seitliche Förderband (101a), das zweite seitliche Förderband (101b) und das horizontale Förderband (101c) mit der gleichen Geschwindigkeit bewegt werden können.

4. Automatisches Konservierungssystem (100) gemäß Anspruch 1, das sich dadurch auszeichnet, dass die mehreren Schubkolben (104) einen vierten vertikalen Kolben (104d) umfassen, der in der Nähe der vierten Station (107d) angeordnet ist.

5. Automatisches Konservierungssystem (100) gemäß Anspruch 1, das sich dadurch auszeichnet, dass es sich beim Schneidesystem (102) um eines der folgenden handelt:
- Wasserstrahl-Schneidesystem;
- Ultraschall-Schneidesystem;
- Klingenschneidesystem.

6. Automatisches Konservierungssystem (100) gemäß Anspruch 1, das sich dadurch auszeichnet, dass es mehrere Zangen (108b, 108c, 108d) umfasst, die in radialer Richtung in Richtung der Rotationsachse des Vertikalachsenrotors (106) und jeweils in die Nähe der zweiten und dritten Schneidestation (107b, 107c) sowie der vierten Station (107d) bewegt werden können, wobei jede Zange (108b, 108c, 108d) an einem ihrer Enden ein halbzylindrisches Profil aufweist.

7. Automatische Konservierungsmethode für ein Lebensmittelprodukt in mindestens ein Gefäß (50) mithilfe des automatischen Konservierungssystems (100) gemäß einem der vorherigen Ansprüche, die die folgenden Schritte umfasst:
- Bewegen eines Lebensmittelprodukts mithilfe eines ersten Handhabungssystems (101) zu einer ersten Schneidestation (107a);
- Durchführen eines ersten Schnitts entlang der vertikalen Richtung mithilfe des ersten Schneideelements (102a);
- Durchführen eines zusätzlichen Schnitts des Lebensmittelprodukts mithilfe eines zweiten Schneideelements (102b) und eines dritten Schneideelements (102c) in Filets von identischer und vorab festgelegter Größe an einer zweiten Schneidestation (107b) bzw. an einer dritten Schneidestation (107c);
- Transportieren des in den vorherigen Schritten geschnittenen Lebensmittelprodukts zu einem Auslass;
- Bewegen mindestens eines leeren Gefäßes (50) über ein mit dem ersten Förderband synchronisiertes Handhabungssystem zu einer Position, die dem Auslass des geschnittenen Lebensmittelprodukts entspricht und unterhalb des Auslasses angeordnet ist;
- Betätigen eines Schubkolbens, um die Filets vertikal vom Auslass in das Gefäß (50) zu bewegen;
- Bewegen des mit Lebensmittelfilets gefüllten Gefäßes (50) in Richtung einer Ölbefüllungsstation;
- Verschließen des Gefäßes (50) mit einem Deckel.

## Revendications

1. Système de mise en conserve automatique (100) pour un produit alimentaire, ledit produit alimentaire étant de préférence des darnes de ton, comportant :
- un rotor à axe vertical (106) comprenant une première plaque circulaire (106a) qui tourne autour d'un axe central X-X ayant au-dessus de son périmètre une pluralité de boîtes (107) espacés à équidistance les unes des autres et qui comporte une section semi-cylindrique en forme de U;
- un premier système de manutention (101) capable de déplacer un produit alimentaire pour le mettre en conserve dans l'une des boîtes du rotor à axe vertical (106);
- un système de découpe (102) pour un produit alimentaire, comportant : un premier élément de coupe (102a) placé à une des extrémités du premier système de manutention (101) et synchronisé avec celui-ci ;
- un deuxième système de manutention (103) capable de déplacer les pots (50) vides dans lesquels le produit alimentaire sera mis en conserve après la découpe par le système de découpe (102);
- un troisième système de manutention (105) capable de déplacer les pots (50) dans lesquels on met le produit alimentaire et découpés par le système de découpe (102), ledit troisième système de découpe (105) étant capable de déplacer les pots (50) dans lesquels on a mis le produit alimentaire grâce au rotor à axe vertical (106) avant de poursuivre vers les étapes de traitement suivantes ;
**caractérisé par le fait que** :
- ledit système de découpe (102) comporte également un deuxième élément de découpe (102b) et un troisième élément de découpe (102c) synchronisé avec le rotor à axe vertical (106) et capable de découper le produit alimentaire pour le mettre en conserve en filets de taille égale et prédéterminée, respectivement à un deuxième poste de découpe (107b) et à un troisième poste de découpe (107c);
- et ledit système de mise en conserve automatique (100) comprend une pluralité de pistons poussoirs (104) comportant : - un premier piston vertical (104a) relié au premier élément de découpe (102a) et placé sur le premier poste de découpe (107a);
- un second piston vertical (104b) relié au deuxième élément de découpe (102b), et placé sur le deuxième poste de découpe (107b);
- un troisième piston vertical (104c) relié au troisième élément de découpe (102c) et placé sur le troisième poste de découpe (107c), la pluralité des pistons poussoirs (104) étant reliée au système de découpe (102) et pouvant être déplacée le long de la direction verticale à côté de l'axe rotatif du rotor à axe vertical (106) et synchronisée avec ledit rotor à axe vertical (106), ledit rotor à axe vertical étant configuré pour tourner de manière simultanée avec le système de découpe (102) afin que chaque boîte comprise dans la pluralité de boîtes (107) soit, successivement : - dans un premier poste de découpe (107a) près du premier système de manutention (101) et du premier élément de découpe (102a); - dans un deuxième poste de découpe (107b) près du deuxième élément de découpe (102b); - dans un troisième poste de découpe (107c) près du troisième élément de découpe (102c); - dans un quatrième poste de découpe (107d) où le produit alimentaire découpé est poussé de manière verticale dans un pot (50); et - dans un cinquième poste (107e) où le pot (50) sortira par le biais du troisième système de manutention (105).

2. Le système de mise en conserve automatique (100) pour un produit alimentaire selon la revendication 1, se **caractérise par** une deuxième plaque circulaire (109), placée plus bas que la première plaque circulaire (106a) du rotor à axe vertical (106) et coaxiale par rapport à ce rotor à axe vertical (106) comportant, au-dessus de sa surface extérieure, une pluralité renfoncements semi-cylindriques (109a) capables de déplacer les pots (50), chacun des dits renfoncements semi-cylindriques (109a) étant placés sous chaque boîte comprise dans la pluralité de boîtes (107) et tournant de manière synchronisée avec la première plaque circulaire (106a).

3. Le système de mise en conserve automatique (100) selon la revendication 1, **caractérisé par le fait que** le premier système de manutention (101) est capable de déplacer un produit alimentaire à mettre en conserve, comporte :
- une première bande transporteuse latérale (101a);
- une deuxième bande transporteuse latérale (101b), plus courte que la première bande transporteuse latérale (101a);
- une bande transporteuse horizontale (101c) interposée entre la première bande transporteuse latérale (101a) et la seconde bande transporteuse latérale (101b);
la première bande transporteuse latérale (101a), la deuxième bande transporteuse latérale (101b) et la bande transporteuse horizontale (101c) peuvent être déplacées à la même vitesse.

4. Le système de mise en conserve automatique (100) selon la revendication 1, se **caractérise par le fait que** ladite pluralité de pistons poussoirs (104) comporte un quatrième piston vertical (104d) placé près du quatrième poste (107d).

5. Le système de mise en conserve automatique (100) selon la revendication 1, se **caractérise par le fait que** le système de découpe (102) est choisi à partir du groupe se composant de :
- un système de découpe au jet d'eau ;
- un système de découpe à ultrasons ;
- un système de découpe par lame.

6. Le système de mise en conserve automatique (100) selon la revendication 1, se **caractérise par** sa pluralité de pinces (108b, 108c, 108d) pouvant être déplacées le long d'une direction radiale vers l'axe rotatif du rotor à axe vertical (106) et respectivement près des deuxièmes et troisièmes postes de découpe (107b, 107c) mais aussi du quatrième poste (107d), chaque pince (108b, 108c, 108d) ayant un profilé de forme semi-cylindre à l'une de ses extrémités.

7. Méthode de mise en conserve pour un produit alimentaire dans au moins un pot (50) par le biais du système de mise en conserve automatique (100) selon l'une des revendications précédentes, comportant les étapes suivantes :
- déplacement d'un produit alimentaire par le biais d'un premier système de manutention (101) jusqu'à un premier poste de découpe (107a);
- pour faire, le long de la direction verticale, une première découpe en utilisant le premier élément de découpe (102a);
- pour faire une découpe supplémentaire du produit alimentaire en utilisant un deuxième élément de découpe (102b) et un troisième élément de découpe (102c), en filets de taille égale et prédéterminée respectivement au deuxième poste de découpe (107b) et au troisième poste de découpe (107c);
- transport du produit alimentaire découpé au cours des étapes précédentes vers une sortie ;
- déplacement d'au moins un pot (50) vide au-dessus d'un système de manutention synchronisé avec la première bande transporteuse jusqu'à une position correspondant à la sortie du produit alimentaire découpé et placé sous ladite sortie ;
- activation d'un bouton poussoir pour déplacer verticalement les filets de la sortie jusque dans le pot (50) ;
- déplacement du pot (50) rempli de filets du produit alimentaire vers un poste d'injection d'huile ;
- fermeture du pot (50) avec un couvercle.
